# EUROPÄISCHE PATENTSCHRIFT

(11) **EP 3 009 829 B1**
(45) Veröffentlichungstag und Bekanntmachung des Hinweises auf die Patenterteilung: **08.03.2017**
(21) Anmeldenummer: 15192390.1
(22) Anmeldetag: 10.12.2009
(51) Int. Cl.: G01N 21/3504, G01J 3/02, G01J 3/42, G01N 21/27

(54) **VERFAHREN UND VORRICHTUNG ZUM MESSEN DER STOFFKONZENTRATION IN GASFÖRMIGEN ODER FLUIDEN MEDIEN ÜBER OPTISCHE SPEKTROSKOPIE MITTELS BREITBANDIGER LICHTQUELLEN**
METHOD AND DEVICE FOR MEASURING THE CONCENTRATION OF SUBSTANCES IN GASEOUS OR FLUID MEDIA THROUGH OPTICAL SPECTROSCOPY USING BROADBAND LIGHT SOURCES
PROCÉDÉ ET DISPOSITIVE DE MESURE DE LA CONCENTRATION D'UNE SUBSTANCE DANS DES MILIEU GAZEUX OU FLUIDS PAR SPECTROSCOPIE OPTIQUE À L'AIDE DE SOURCES LUMINEUSES À LARGE BANDE

(30) Priorität: 22.12.2008 DE 102008064173
(43) Veröffentlichungstag der Anmeldung: 20.04.2016
(62) Teilanmeldung aus: 09796360.7
(73) Patentinhaber: Bluepoint Medical GmbH & Co. KG, 23923 Selmsdorf (DE)
(72) Erfinder: DEGNER, Martin, 18236 Kröpelin (DE); EWALD, Hartmut, 18055 Rostock (DE); DAMASCHKE, Nils, 18211 Bargeshagen (DE); LEWIS, Elfed, Co Clare (IE)
(74) Vertreter: Seemann & Partner Patentanwälte mbB

(56) Entgegenhaltungen:
- EP-A2- 0 145 877
- WO-A1-93/06458
- WO-A1-2005/108939
- GB-A- 2 233 087

## Beschreibung

### Beschreibung

Die Erfindung bezieht sich auf ein Verfahren und auf eine Vorrichtung zur Bestimmung von Stoffkonzentrationen in gasförmigen oder fluiden Medien mittels optischer Absorptionsspektroskopie. Die Vorrichtung dient unter anderem zum Messen von Stickstoffmonoxid (NO), Stickstoffdioxyd (NO₂), Schwefeldioxyd (SO₂), Ozon (O₃), sowie Komponenten in fluiden Medien und dgl., für Verbrennungsmotoren, insbesondere bei der online Überwachung von Dieselmotoren, in der Umweltmesstechnik, in der Medizintechnik bspw. zur Messung der Atemluft u. dgl.

Zum Messen von Stoffkonzentrationen sind spektroskopische Messungen mit Hilfe von Breitbandlichtquellen und spektral selektiven Empfängern, wie z.B. Spektrometern oder gefilterten Fotoempfängern, bekannt. Darüber hinaus ist es üblich, spektral selektive Quellen, wie z.B. Laser oder gefilterte Breitbandlichtquellen, über eine Messstrecke auf gefilterte oder ungefilterte Empfänger zu leiten, um so z.B. Gase und Flüssigkeiten zu charakterisieren. Eine logische Folgerung hieraus ist der Einsatz von ohnehin spektral selektiven LED-Lichtquellen mit und ohne optische Filter. LEDs sind hierbei als Breitbandlichtquellen zu verstehen, da sie im Gegensatz zu Linienlichtquellen (z.B. Laser) ein vergleichsweise breites Frequenzspektrum abstrahlen. Der Einsatz von Lichtführungsoptiken, z.B. Lichtwellenleitern (LWL), zur mechanischen und thermischen Entkopplung bzw. zur räumlichen Trennung von Messort und Sende-/Empfangseinheit ist ebenfalls in der Sensorik bekannt.

Das grundlegende Messprinzip der optischen Spektroskopie basiert auf der Extinktionsmessung von Licht, welches eine Messzelle durchlaufen hat. Der Rückschluss auf eine definierte Stoffmengenkonzentration in der Messzelle ist also nur ein indirektes Verfahren. Messsicherheit kann durch den Einsatz zusätzlicher, so genannter Referenzwellenlangen, erreicht werden, wobei die spektrale Charakteristik des zu messenden Stoffes ausgenutzt wird. Diese Aussagen führen beispielsweise zu einem Messaufbau, der in Figur 5 im Aufsatz von M. Degner und H. Ewald "Low cost sensor for online detection of harmful diesel combustion gases in UV-VIS region" [SPIE Photonics Europe 2006, Photonics in the Automobile II, ISBN 0-8194-6254-3, FR Strasbourg, 04/2006] dargestellt ist. Neben breitbandigen Quellen werden in der Spektroskopie für hohe Auflösungen sehr viel häufiger durchstimmbare Laserquellen eingesetzt. Eine Absorptionsbande des gesuchten Stoffes wird dabei mittels der Laserlinie gescannt. Vereinfacht gesehen ist die Intensität des empfangenen Lichtes außerhalb der Absorptionsbande dabei als Referenz zur Intensität an der Stelle der Absorptionsbande zu sehen, da im Bereich der Absorptionsbande die Lichtintensität geschwächt wird.

Nachteilig hierbei ist, dass sich mit Hilfe der so genannten Laserspektroskopie zwar hohe Konzentrations-Auflösungen erzielen lassen. Die Anzahl der zu detektierenden Stoffe ist jedoch durch das Vorhandensein einer geeigneten Laserquelle bei den entsprechenden Stoffinteraktionswellenlängen eingeschränkt. Zudem sind diese Anordnungen oft sehr teuer, wenig robust und somit nicht für Massenanwendungen in der Sensorik tauglich.

Ein Beispiel für die Verwendung durchstimmbarer Laser zur Spektroskopie ist in WO 2005/108939 A1 gezeigt, worin eine sogenannte "Cavity Ringdown Spectroscopy with Swept-Frequency Laser" offenbart wird. Wenn die Frequenz eine Resonanzfrequenz eines optischen Resonators zwischen zwei hochreflektierenden Spiegeln trifft, koppelt das Laserlicht in den Resonator ein. Dann bildet sich das sogenannte "Ringdown"-Licht. Wenn die Frequenz sich von der Resonanzfrequenz entfernt, schwächt sich das Licht im Resonator entsprechend der von einem im Resonator eingeführten Fluid verminderten Resonatorgüte wieder ab. Ein Teil des Ringdown-Lichts wird detektiert und die Geschwindigkeit der Abnahme des Lichts vom Ringdown-Lichtsignal gemessen. Die Vorrichtung erlaubt die Ermittlung der Abnahmeraten von Ringdown-Licht bei vielen verschiedenen Frequenzen für ein einzelnes Sample.

WO 93/06458 A1 offenbart eine Messzelle für die optische Absorptionsspektroskopie, deren optische Absorptionslänge zwischen Messungen verschiedener Substanzen an die jeweils nächste zu messende Substanz anpassbar ist.

Der Einsatz von Breitbandlichtquellen führt in Kombination mit Spektrometern ebenfalls zu kostenintensiven und zudem nicht sehr sensitiven Messaufbauten. Hierbei wird das gesamte Spektrum der Breitbandlichtquelle mit dem Spektrum nach Durchtritt durch die Messzelle verglichen. Gefilterte Breitbandlichtquellen und speziell die LEDs sind dagegen eine eher kostengünstige Alternative. Das generelle Problem der Anordnungen mit breitbandigen Lichtquellen ist die spektrale und zeitliche Schwankung der Lichtintensität bzw. Abstrahlcharakteristik, wodurch die Auflösung und vor allem die maximal erreichbare Genauigkeit stark eingeschränkt werden. Außerdem sind aufgrund der begrenzten spektralen optischen Leistungsdichte (abgesehen von einigen sehr speziellen LEDs) hohe Messzeiten erforderlich, um so hohe Auflösungen zu erzielen.

Der Erfindung liegt von daher die Aufgabe zugrunde, ein kostengünstiges, hoch auflösendes und gleichzeitig schnelles spektroskopisches Verfahren sowie eine Vorrichtung zum Messen von Stoffkonzentrationen in gasförmigen oder fluiden Medien zu schaffen, welches bzw. welche robust gegenüber äußeren Einflüssen ist.

Die Lösung dieser Aufgabe ergibt sich durch das Verfahren gemäß Patentanspruch 1 sowie durch die Vorrichtung gemäß Patentanspruch 2.

Das erfindungsgemäße Verfahren zur Bestimmung von Stoffkonzentrationen in gasförmigen oder fluiden Medien mittels optischer Absorptionsspektroskopie, mit 1 bis n spektral selektiven Breitbandlichtquellen, insbesondere LEDs, sieht vor, dass das Licht der Breitbandlichtquellen durch erste Lichtwellenleiter in einen gemeinsamen zweiten Lichtwellenleiter eines Lichtpfads gekoppelt und dann durch eine Messstrecke einer Messzelle mit einem gasförmigen oder fluiden Medium einem Messdetektor zugeleitet wird, der auch als Referenzdetektor verwendet wird, wobei die Messzelle als selbstreferenzierende Messzelle ausgebildet ist, in der zur Erzeugung eines Referenzsignals die Interaktionslänge des zu messenden Mediums über die effektive Absorptionslänge der Messzelle und/oder ein Druck eines zu messenden gasförmigen Mediums veränderbar ist, wobei zur Bestimmung der Stoffkonzentrationen das optische System referenziert wird, indem ein mittels des Messdetektors aufgenommener optischer Signalverlauf entsprechend der Veränderung der effektiven Absorptionslänge der Messzelle oder des Drucks des gasförmigen Mediums demoduliert wird, wobei die zeitlich und örtlich schwankende Abstrahlcharakteristik der Breitbandlichtquellen mittels eines Modenkopplers im Lichtpfad zwischen dem zweiten Lichtwellenleiter und einem weiteren Lichtwellenleiter vor der Messzelle homogenisiert wird. Die erfindungsgemäße Vorrichtung ist dementsprechend ausgebildet. Der Modenkoppler sollte dabei so ausgelegt sein, dass er eine möglichst geringe Dämpfung oder Streuung aufweist. Dabei werden typischerweise kostengünstige spektral selektive Breitbandlichtquellen benutzt, deren Licht über eine Lichtführung in die Messstrecke eingekoppelt und spektral selektiv ausgewertet wird.

Die Erfindung sieht somit eine selbstreferenzierende Messanordnung vor, um so die gewünschten Genauigkeiten zu erreichen. Zunächst werden die Kopplung und Modenmischung der einzelnen Lichtquellen mit Hilfe von Faseroptiken genutzt, um für alle Wellenlängen einen möglichst gleichen Pfad durch die optische Messzelle zu erhalten. Somit wirken sich Störeinflüsse in der Zelle z.B. auf die Absorptions- und Referenzwellenlängen in gleicher Weise aus. Hierbei wird auf Lichtteilung und somit auf einen zweiten Empfangskanal zur Referenzierung verzichtet. Stattdessen wird in einer Variante die effektive Absorptionslange der Messzelle verändert (selbstreferenzierend) und somit das Messsignal in definierter Weise moduliert, wie es durch Störungen nicht möglich ist. Der durch den Empfangsteil aufgenommene Signalverlauf kann entsprechend demoduliert werden. Hierdurch werden zumindest zwei Signale gene-riert, die zur Referenzierung jeder einzelnen Wellenlänge dienen. Der Vorteil dieser Anordnung liegt darin, dass der gesamte optische Pfad außerhalb der Messzelle derselbe ist und nur innerhalb der Messzelle durch die Modulation verändert wird. Dadurch ist nur eine Empfangseinheit notwendig, es müssen nicht zwei gleichartige Empfänger realisiert werden. Somit wirken sich Empfangsstörungen in gleicher Weise auf das Referenz- wie auf das Messsignal aus. Nachteilig ist hier der komplexere Aufbau der Messzelle.

Bei einer beispielhaften Ausführungsform kann durch aktives Umschalten bzw. Kippen oder Rotieren einer kleinen, in die Messzelle eingesetzten Glasplatte die Weglänge durch das zu messende Medium variiert und somit eine Referenz durch das Messvolumen erzeugt werden. Durch die mögliche Verwendung eines Hohlspiegels als Reflektor werden weiterhin wellenabhängige Störeffekte der Dispersion minimiert.

Bei einer weiteren beispielhaften Ausführungsform der selbstreferenzierenden Messzelle wird ein Teil des Lichtes direkt an einem ersten Spiegel zum Empfänger reflektiert. Ein zweiter Teil wird weitergeleitet und in Abhängigkeit von der Rotorstellung über einen zweiten Spiegel zum Empfänger reflektiert. Dieser Rotor wird z.B. durch die Strömung des zu messenden Mediums angetrieben und moduliert somit die effektive Weglänge. Auch hier liegt ein wesentlicher Vorteil gegenüber herkömmlichen Referenzanordnungen in der Bildung der Referenz innerhalb der Messzelle, wodurch es möglich wird, dass Störungen in gleicher Weise auf die Referenz und den Messpfad einwirken, wodurch eine starke Störgrößenunterdrückung gewährleistet wird.

Speziell für gasförmige Medien kann erfindungsgemäß eine zweite Art der Referenzierung realisiert werden, indem das indirekte Verfahren der optischen Spektroskopie auf einen anderen direkten Sensoreffekt überführt wird. Durch zusätzliche Modulation der Messgröße, z.B. durch Variation des Druckes, ändern sich die Volumenkonzentration des Gases und somit die detektierten Extinktionsmesswerte der einzelnen Quellen. Nimmt man synchron die Variation dieses zusätzlichen physikalischen Effektes bspw. unter Nutzung eines kommerziellen Sensors auf (z.B. den Druck) So lässt sich der Effekt der Modulation nutzen, um das gesamte System sehr genau zu referenzieren, Störungen werden so unterdrückt und die realen Konzentrationsmesswerte bei Normdruck ermittelt. Da in vielen Systemen Druckschwankungen innert sind, ist dies eine sehr einfache und effektive Methode zur Selbstreferenzierung der Messzelle

Als ein Anwendungsfall der oben beschriebenen Verfahren zur Referenzierung und zur Realisierung kostengünstiger, hochgenauer spektroskopischer Sensoren, wird hier der Abgassensor für Verbrennungsprozesse bzw. -motoren auf der Basis von neuartigen UV-LEDs angeführt. Dieser Sensor ist auch konstruktiv für den Einsatz in extrem rauer Umgebung, wie z.B. dem Abgaskanal eines Pkw, geeignet und erprobt (u.a. hohe Temperaturen, Vibrationen, chemisch aggressive Medien).

Die erfindungsgemäße Vorrichtung zum Messen von Stoffkonzentrationen in gasförmigen oder fluiden Medien ist nachfolgend anhand von in den Zeichnungen dargestellter Ausführungsformen naher erläutert. Es zeigt:
- Fig. 1: eine prinzipielle Darstellung eines nicht erfindungsgemäßen Beispiels,
- Fig. 2: eine prinzipielle Darstellung einer ersten und zweiten Ausführungsform,
- Fig. 3: einen prinzipiellen Längsschnitt durch eine selbstreferenzierende Messzelle gemäß der ersten, in Fig. 2 dargestellten Ausführungsform mit Hilfe eines kippenden Glasplättchens und
- Fig. 4: einen prinzipiellen Längsschnitt durch eine zweite selbstreferenzierende Messzelle gemäß der ersten, in Fig. 2 dargestellten Ausführungsform.

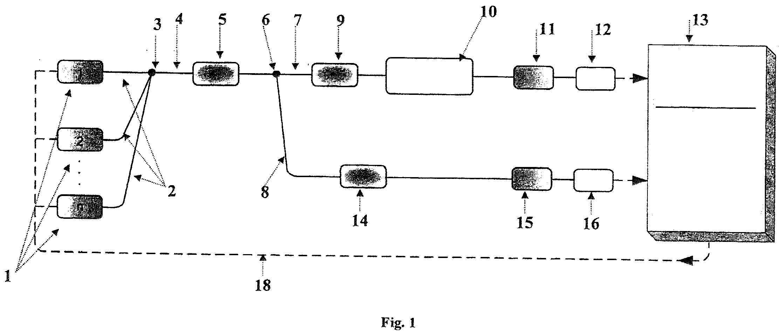

Das in Fig. 1 dargestellte nicht erfindungsgemäße Beispiel einer Vorrichtung zum Messen von Stoffenkonzentrationen in Medien umfasst 1 ... n spektral selektive breitbandige Lichtquellen 1, bspw. LEDs, die über Lichtwellenleiter 2 einem ersten Faserkoppler 3 zugeführt, dort gemischt und auf einen Lichtpfad gekoppelt werden. Ein an den ersten Koppler 3 angeschlossener Lichtwellenleiter 4 ist über einen Modenkoppler 5 einem zweiten Faserkoppler 6 (z.B. 75/25) zugeführt. Von diesem gehen zwei weitere Lichtwellenleiter 7 und 8 ab, von denen der Lichtwellenleiter 7 über einen Modenkoppler 9 zu einer das zu messende Medium enthaltenden Messzelle 10, weiter zu einem ersten Fotoempfänger 11, zu einem A/D-Wandler 12 und dann zu einem Rechner 13, z.B. einem µC oder einem DSP geführt ist. Der weitere Lichtwellenleiter 8 führt das Quellenlicht über einen Modenkoppler 14 zu einem zweiten Fotoempfänger 15, einem A/D- Wandler 16 und dann zu dem o.g. Rechner. Durch geeignete Signalverarbeitung, z.B. Referenzierung durch Vergleich der beiden Empfangskanäle, wird eine faseroptische Referenzierung ermöglicht. Somit ist eine sehr genaue Konzentrationsmessung der in der Messstrecke der Messzelle 10 befindlichen Stoffe realisierbar. Die elektronische Ansteuerung der spektral selektiven Lichtquellen erfolgt über den o.g. Rechner via Ansteuerleitung 18, was günstig für synchrone Ansteuerung und Signalaufnahme bzgl. hoher Messraten ist.

In diesem nicht erfindungsgemäßen Beispiel erfolgt die Homogenisierung der Abstrahlcharakteristik der 1 ... n spektral selektiven Lichtquellen 1 durch die Verwendung der Modenkoppler 5, 9, 14. Die anschließende Aufteilung des Lichtes ist somit nicht mehr von der schwankenden Intensitätsverteilung der Lichtquellen 1 abhängig. Das eingestrahlte Licht "vergisst" quasi, wo es herkommt. Dabei wird die Modenkopplung hier über die Modenkoppler 5, 9, 14 in den optischen Lichtwellenleitern 2, 4, 7, 8 eingesetzt. Hierfür gibt es unterschiedliche Ausführungsmöglichkeiten, wie z.B. Nutzung sehr langer Fasern, Taper, mehrdimensionale Biegekoppler und dgl. Mit den Modenkopplern 5, 9, 14 wird ein effizientes optisches Bauelement zur Homogenisierung der Abstrahlcharakteristik verwendet.

Die Schwankungen der gefilterten spektral selektiven breitbandigen Lichtquellen 1 ... n, insbesondere LEDs, werden mit Hilfe der Referenzanordnung, bestehend aus dem Lichtpfad des Lichtwellenleiters 8, mit Modenkoppler 14 und dem zweiten Fotoempfänger 15 sowie dem zugehörigen A/D-Wandler 16 mit entsprechender Signalverarbeitung, im Rechner 13 kompensiert. Die durch die Messanordnung und Umgebung bedingten Störgrößen werden somit gegenüber der Zielgröße unterdrückt. Die Messsignalsicherheit ist daher wesentlich größer und speziell dadurch werden höhere Messgenauigkeiten/Auflösungen erreicht. Durch den Einsatz der Modenkoppler 5, 9, 14, ausgeführt z.B. als Ringkoppler, und der Faserkoppler 3, 6 zur Teilung des Lichtes wird eine quellenunabhängige, robuste und somit exakte Referenzierung ermöglicht, um so z.B. Gaskonzentrationen von unter 1 ppm bei einer Absorptionslange von wenigen Zentimetern bei einer Messzeit von wenigen Millisekunden zu messen.

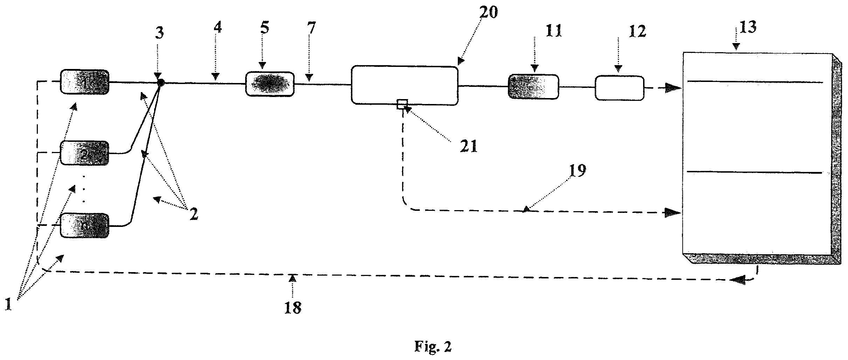

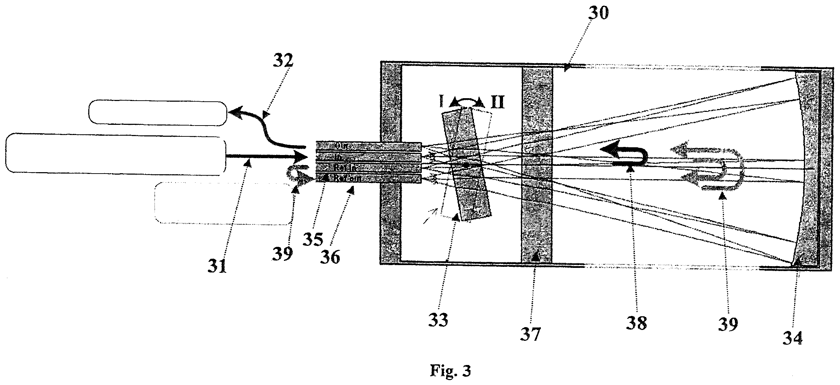

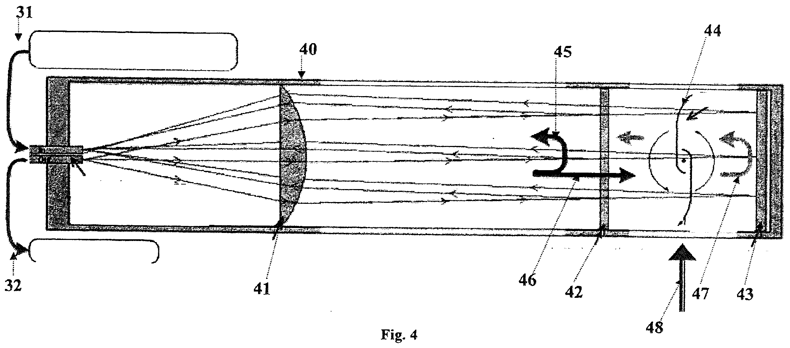

Die in Fig. 2 gezeigte Darstellung einer erfindungsgemäßen Ausführungsform umfasst in gleicher Weise wie das in Fig. 1 gezeigte nicht erfindungsgemäße Beispiel die 1 ... n spektral selektiven breitbandigen Lichtquellen 1, die Lichtwellenleiter 2, den Faserkoppler 3, den Modenkoppler 5, die Lichtwellenleiter 4, 7, die Messzelle 20 mit der Messstrecke, den Fotoempfänger 11, den A/D-Wandler 12 und den Rechner 13. Im Gegensatz zum nicht erfindungsgemäßen Beispiel nach Fig. 1 fehlt hier die faseroptische Lichtaufteilung mit dem Referenzpfad. Hier ist die Messzelle 20 selbstreferenzierend ausgeführt, dazu wird der Lichtpfad bspw. entsprechend der Darstellungen in Fig. 3 bzw. Fig. 4 oder entsprechend der zweiten Ausführungsform moduliert. Zum Zwecke der Detektion der zuletzt genannten Modulation ist der Sensor 21 mit der Messleitung 19 integriert, welche genau wie der Fotoempfänger dem Rechner Messwerte zuführt. Im Rechner findet eine entsprechende Demodulation der Messsignale statt, mit deren Ergebnis die Referenzierung erfolgt.

In der Ausführungsform nach Fig. 2 ist somit eine selbstreferenzierende Messzellenanordnung vorgesehen, um so eine Quellunabhängigkeit und somit die gewünschten Genauigkeiten zu erreichen. Auch hier werden zunächst die Kopplung im Faserkoppler 3 und die Modenmischung der einzelnen Lichtquellen 1 mit Hilfe von Faseroptiken in dem Modenkoppler 5 genutzt, um für alle Wellenlangen einen möglichst gleichen Pfad durch die optische Messzelle 20 der Messstrecke zu erhalten. Somit wirken sich Störeinflüsse in der Messzelle 20 z.B. auf die Absorptions- und Referenzwellenlängen in gleicher Weise aus.

Im Gegensatz zum nicht erfindungsgemäßen Beispiel nach Fig. 1 wird hier auf Lichtteilung und somit auf einen zweiten Empfangskanal zur Referenzierung verzichtet. Stattdessen wird die effektive Absorptionslange der Messzelle verändert (selbstreferenzierend) und somit das Messsignal in definierter Weise moduliert, wie es durch Störungen nicht möglich ist. Der durch den einen Empfangsteil aufgenommene Signalverlauf kann entsprechend demoduliert werden. Hierdurch werden zumindest zwei Signale generiert, die zur Referenzierung jeder einzelnen Wellenlange dienen. Der Vorteil dieser Anordnung liegt darin, dass der gesamte optische Pfad außerhalb der Messzelle 20 derselbe ist und nur innerhalb der Messzelle 20 durch die Modulation verändert wird. Dadurch ist nur eine Empfangseinheit notwendig, es müssen nicht zwei gleichartige Empfänger realisiert werden. Somit wirken sich Empfangsstörungen in gleicher Weise auf das Referenz- wie auf das Messsignal aus. Nachteilig ist hier der komplexere Aufbau der Messzelle 30, 40.

Speziell für gasförmige Medien kann eine weitere Art der Referenzierung realisiert werden, indem das indirekte Verfahren der optischen Spektroskopie mit Hilfe einer einfachen Messzelle wie sie in Anwendungsfall 1 beschrieben ist auf einen anderen direkten Sensoreffekt überführt wird. Dies wird durch zusätzliche Modulation der Messgröße, z.B. durch Variation des Druckes realisiert, so ändern sich die Volumenkonzentration des Gases und somit die detektierten Extinktionsmesswerte der einzelnen Quellen. Nimmt man synchron die Variation dieses zusätzlichen physikalischen Effektes bspw. unter Nutzung eines kommerziellen Sensors 21 auf (z.B. den Druck), so lasst sich der Effekt der Modulation nutzen, um das gesamte System sehr genau zu referenzieren, Störungen werden so unterdrückt und die realen Konzentrationsmesswerte bei Normdruck ermittelt. Da in vielen Systemen Druckschwankungen innert sind, ist dies eine sehr einfache und effektive Methode zur Selbstreferenzierung der Messzelle.

Die weitere Ausführungsform nach Fig. 3 zeigt die Messzelle 30, in der sich die zu messenden Stoffe befinden, mit Ein- und Ausgängen 31, 32 für das von den Lichtquellen 1 abgestrahlte und über den Lichtwellenleiter 4 und den Modenkoppler 5 der Messzelle 30 und von dieser über den Lichtwellenleiter 7 dem Fotoempfänger 11 zugeführte Licht. In die Messzelle 30 ist eine Glasplatte bzw. ein Glasplättchen 33 integriert, durch dessen Kippen oder Rotieren die effektive Weglänge durch das zu messende Medium in der Messzelle 30 umgeschaltet/variiert wird. In der Position II des Glasplättchens 33 folgt das Licht prinzipiell der Richtung, welche durch den Pfeil 38 markiert ist. In der Position I des Glasplättchens 33 folgt es den Pfeilen 39 auch über die Ein- und Ausgänge 35, 36. Somit wird eine Referenz durch die Interaktion mit dem Medium im Messvolumen der Messzelle 30 erzeugt. Vorteilhaft erweist sich hier, dass das Licht auf beiden Wegen, d.h. auf beiden Positionen I und II, dieselben optischen Komponenten durchlaufen hat. Durch die Verwendung eines Hohlspiegels 34 als Reflektor am rechten Ende der Messzelle 30 (Fig. 3) werden wellenabhängige Effekte der Dispersion minimiert. Hier konnte jedoch auch ein Planspiegel eingesetzt werden, dann würde jedoch die optionale Glasplatte 37, die das Messvolumen begrenzt, durch eine Kollimatorlinse ersetzt werden.

Bei der Ausführungsform gemäß Fig. 4 der selbstreferenzierenden Messzelle 40 wird ein Teil des über den Eingang 31 eingekoppelten und in der Kollimatorlinse 41 kollimierten Lichtes entsprechend der Richtung 45 am halbdurchlässigen Spiegel 42 reflektiert. Dieses reflektierte Licht tritt dann wieder durch die Kollimatorlinse 41, wird zum Ausgang 32 und schließlich zum Empfangsteil 11, 12, 13 geleitet. Ein zweiter Teil des eingekoppelten Lichtes passiert entsprechend der Richtung 4 6 den halbdurchlässigen Spiegel 42 und gelangt in das zweite Messvolumen II. In Abhängigkeit von der Orientierung eines Rotors 44 im optischen Pfad wird dieser Teil des Lichtes an einem Vollspiegel 43 (in Fig. 4 rechts) reflektiert und gelangt entsprechend der Reflexion 47 zum Ausgang 32 bzw. zur Empfangseinheit 11, 12, 13.

Der Rotor 44 wird z.B. durch die Strömung des zu messenden Mediums, welches die Messzelle 40 im Messvolumen II in Richtung der Pfeile 48 durchströmt, angetrieben. Die Flügel des Rotors 44 dienen der Lichtabschottung und modulieren somit die effektive Weglänge des Lichts bzw. entsprechend die Stärke der Interaktion des Lichtes mit dem Medium. Dabei befindet sich im Messvolumen I und II der Messzelle 40 dasselbe zu messende Medium.

Als ein Anwendungsfall der oben abgehandelten Verfahren zur Referenzierung und zur Realisierung kostengünstiger, hochgenauer spektroskopischer Sensoren, wird hier der Abgassensor für Verbrennungsprozesse bzw. -motoren auf der Basis von neuartigen UV-LEDs angeführt. Dieser Sensor ist auch konstruktiv für den Einsatz in extrem rauer Umgebung, wie z.B. dem Abgaskanal eines Pkw, geeignet und erprobt (u.a. hohe Temperaturen, Vibrationen, chemisch aggressive Medien).

### Bezugszeichenliste

- 01: Lichtquelle
- 02: Lichtwellenleiter
- 03: Faserkoppler
- 04: Lichtwellenleiter
- 05: Modenkoppler
- 06: Faserkoppler
- 07: Lichtwellenleiter
- 08: Lichtwellenleiter
- 09: Modemkoppler
- 10: Messzelle
- 11: Fotoempfänger
- 12: Analog-/Digitalwandler (A/D-Wandler)
- 13: Rechner
- 14: Modenkoppler
- 15: Fotoempfänger
- 16: A/D-Wandler
- 18: Quellenansteuerleitung
- 19: Messleitung
- 20: referenzierende Messzelle
- 21: Sensor
- 30: Messzelle
- 31: Lichteingang für nicht stabilisierte Lichtquelle bzw. gestörte Zuleitung
- 32: Lichtausgang, zum Fotoempfänger
- 33: Glasplatte
- 34: Hohlspiegel als Reflektor
- 35: Eingang zur Lichtrückführung
- 36: Ausgang der Lichtrückführung
- 37: Optionale Glasplatte
- 38: Richtung des ersten Lichtpfades
- 39: Richtung des zweiten Lichtpfades
- 40: Messzelle
- 41: Kollimatorlinse
- 42: Halbdurchlässiger Spiegel
- 43: Vollspiegel
- 44: Rotor
- 45: Richtung des ersten Teillichtstromes
- 46: Richtung des zweiten Teillichtstromes
- 47: Reflexion des zweiten Teillichtstromes
- 48: Richtung der Anströmung

## Patentansprüche

1. Verfahren zur Bestimmung von Stoffkonzentrationen in gasförmigen oder fluiden Medien mittels optischer Absorptionsspektroskopie, mit 1 bis n spektral selektiven Breitbandlichtquellen (1), insbesondere LEDs, wobei das Licht der Breitbandlichtquellen (1) durch erste Lichtwellenleiter (2) in einen gemeinsamen zweiten Lichtwellenleiter (4) eines Lichtpfads gekoppelt und dann durch eine Messstrecke einer Messzelle (20, 30, 40) mit einem gasförmigen oder fluiden Medium einem Messdetektor (11) zugeleitet wird, der auch als Referenzdetektor verwendet wird, wobei die Messzelle (20, 30, 40) als selbstreferenzierende Messzelle (20, 30, 40) ausgebildet ist, in der zur Erzeugung eines Referenzsignals die Interaktionslänge des zu messenden Mediums über die effektive Absorptionslänge der Messzelle (20, 30, 40) und/oder ein Druck eines zu messenden gasförmigen Mediums veränderbar ist, wobei zur Bestimmung der Stoffkonzentrationen das optische System referenziert wird, indem ein mittels des Messdetektors (11) aufgenommener optischer Signalverlauf entsprechend der Veränderung der effektiven Absorptionslänge der Messzelle (20, 30, 40) oder des Drucks des gasförmigen Mediums demoduliert wird, wobei die zeitlich und örtlich schwankende Abstrahlcharakteristik der Breitbandlichtquellen (1) mittels eines Modenkopplers (5) im Lichtpfad zwischen dem zweiten Lichtwellenleiter (4) und einem weiteren Lichtwellenleiter (7) vor der Messzelle (20, 30, 40) homogenisiert wird.

2. Vorrichtung zur Bestimmung von Stoffkonzentrationen in gasförmigen oder fluiden Medien mittels optischer Absorptionsspektroskopie, mit 1 bis n spektral selektiven Breitbandlichtquellen (1), insbesondere LEDs, die durch erste Lichtwellenleiter (2) mit einem ersten Lichtwellenleiter- oder Faserkoppler (3) verbunden sind, einem an den Lichtwellenleiter- oder Faserkoppler (3) angeschlossenen gemeinsamen zweiten Lichtwellenleiter (4), der das Licht der Breitbandlichtquellen (1) zu einer Messzelle (20, 30, 40) mit einer Messstrecke leitet, sowie einem Messdetektor (11), der auch ein Referenzdetektor ist und der mit der Messzelle (20, 30, 40) verbunden ist und dem das von den Breitbandlichtquellen (1) zugeführte Licht durch die Messstrecke zugeleitet wird, wobei die Messzelle (20, 30, 40) als selbstreferenzierenden Messzelle (20, 30, 40) ausgebildet ist, in der zur Erzeugung eines Referenzsignals die Interaktionslänge des zu messenden Mediums über die effektive Absorptionslänge der Messzelle (20, 30, 40) und/oder ein Druck des gasförmigen oder fluiden Mediums veränderbar ist, wobei ein Modenkoppler (5) zwischen dem zweiten Lichtwellenleiter (4) und einem weiteren Lichtwellenleiter (7) im Lichtpfad zwischen dem ersten Lichtwellenleiter- oder Faserkoppler (3) und der Messzelle (20, 30, 40) zur Homogenisierung der zeitlichen und örtlich schwankenden Abstrahlcharakteristik der Breitbandlichtquellen (1) vorgesehen ist, wobei die Vorrichtung einen Rechner (13) umfasst, der ausgebildet ist, zur Bestimmung der Stoffkonzentrationen das optische System zu referenzieren, indem ein mittels des Messdetektors (11) aufgenommener optischer Signalverlauf entsprechend der Veränderung der effektiven Absorptionslänge der Messzelle (20, 30, 40) oder des Drucks des gasförmigen Mediums demoduliert wird.

3. Vorrichtung nach Anspruch 2, **dadurch gekennzeichnet, dass** zur Veränderung der Interaktionslänge des zu messenden Mediums in der Messzelle (30) ein kippbares oder drehbares Glasplättchen (33) angeordnet ist.

4. Vorrichtung nach Anspruch 3, **dadurch gekennzeichnet, dass** am Ende der Messzelle (30) ein Hohlspiegel (34) als Reflektor eingesetzt ist.

5. Vorrichtung nach Anspruch 2, **dadurch gekennzeichnet, dass** die selbstreferenzierende Messstrecke der Messzelle (40) einen halbdurchlässigen Spiegel (42) und einen Vollspiegel (43) umfasst, wobei ein zusätzlicher Rotor (44), welcher durch das strömende zu messende Medium angetrieben sein kann und sich im optischen Pfad befindet, den Vollspiegel (43) zeitweise abschattet.

6. Vorrichtung nach Anspruch 2, **dadurch gekennzeichnet, dass** die Messzelle (20) einen zusätzlichen Sensor (21) zur Erfassung einer Druckänderung umfasst, durch die ein vom Messdetektor (11) erfasstes Messsignal in definierter Weise verändert wird.

## Claims

1. A method for determining substance concentrations in gaseous or fluid media by optical absorption spectroscopy, with 1 to n spectrally selective broadband light sources (1), in particular LEDs, wherein the light of the broadband light sources (1) is coupled through first optical wave guides (2) into a joint second optical wave guide (4) of a light path and is then guided through a measurement path of a measurement cell (20, 30, 40) with a gaseous or fluid medium to a measurement detector (11) that is also used as a reference detector, wherein the measurement cell (20, 30, 40) is designed as a self-referencing measurement cell (20, 30, 40) in which, to generate a reference signal, the interaction length of the medium to be measured can be changed by way of the effective absorption length of the measurement cell (20, 30, 40) and/or a pressure of a gaseous medium to be measured can be changed, wherein to determine the substance concentrations, the optical system is referenced in that an optical signal characteristic recorded with the measurement detector (11) is demodulated corresponding to the change in the effective absorption length of the measurement cell (20, 30, 40) or the pressure of the gaseous medium, wherein the temporally or locally fluctuating emission characteristic of the broadband light sources (1) is homogenized by a mode coupler (5) in the light path between the second optical wave guide (4) and another optical wave guide (7) in front of the measuring cell (20, 30, 40).

2. An apparatus for determining substance concentrations in gaseous or fluid media using absorption spectroscopy with 1 to n spectrally selective broadband light sources (1), in particular LEDs, which are connected via first optical wave guides (2) to a first optical wave guide coupler or optical fiber coupler (3), a joint second optical wave guide (4) that is connected to the optical wave guide coupler or optical fiber coupler (3) and guides the light of the broadband light sources (1) to a measuring cell (20, 30, 40) with a measuring path, as well as a measuring detector (11) that is also a reference detector, and that is connected to the measuring cell (20, 30, 40) and to which the light supplied by the broadband light sources (1) is guided through the measuring path, wherein the measurement cell (20, 30, 40) is designed as a self-referencing measuring cell (20, 30, 40) in which, to generate a reference signal, the interaction length of the medium to be measured can be changed by way of the effective absorption length of the measurement cell (20, 30, 40) and/or a pressure of a gaseous or fluid medium can be changed, wherein a mode coupler (5) is provided between the second optical wave guide (4) and another optical wave guide (7) in the light path between the first optical wave guide coupler or optical fiber coupler (3) and the measuring cell (20, 30, 40) to homogenize the temporarily and locally fluctuating emission characteristic of the broadband light sources (1), wherein the apparatus comprises a computer (13) that is designed to reference the optical system to determine the substance concentrations in that an optical signal characteristic recorded by the measurement detector (11) is demodulated corresponding to the change in the effective absorption length of the measurement cell (20, 30, 40) or the pressure of the gaseous medium.

3. The apparatus according to claim 2, **characterized in that** a tiltable or rotatable glass plate (33) is arranged in the measurement cell (30) to change the interaction length of the medium to be measured.

4. The apparatus according to claim 3, **characterizing in that** a hollow mirror (34) is inserted as a reflector at the end of the measurement cell (30).

5. The apparatus according to claim 2, **characterized in that** the self-referencing measuring path of the measurement cell (40) comprises a semipermeable mirror (42) and a full mirror (43), wherein an additional rotor (44) that can be driven by the flowing medium to be measured and is located in the optical path temporarily shades the full mirror (43).

6. The apparatus according to claim 2, **characterized in that** the measurement cell (20) comprises an additional sensor (21) for detecting a pressure change by means of which a measuring signal detected by the measurement detector (11) is changed in a specific manner.

## Revendications

1. Procédé servant à déterminer la concentration d'une substance dans des milieux liquides ou gazeux au moyen d'une spectroscopie optique d'absorption, comprenant de 1 à n sources de lumière à large bande (1) à sélectivité spectrale, en particulier des DEL, la lumière des sources de lumière à large bande (1) étant couplée, par des premiers guides d'ondes de lumière (2), dans un deuxième guide d'ondes de lumière (4) commun d'un trajet lumineux, et ensuite, par un tronçon de mesure d'une cellule de mesure (20, 30, 40) alimentée avec un fluide gazeux ou liquide, à un détecteur de mesure (11), qui est aussi utilisé comme un détecteur de référence, la cellule de mesure (20, 30, 40) étant conçue en tant que cellule d'auto-référencement de mesure (20, 30, 40), dans lequel, pour générer un signal de référence, la longueur d'interaction du milieu à mesurer sur la longueur d'absorption effective de la cellule de mesure (20, 30, 40) et / ou de la pression d'un milieu gazeux à mesurer est variable, dans lequel, pour la détermination des concentrations de substance, le système optique est référencé par un enregistrement de la forme d'onde optique du signal par le détecteur de mesure (11) en fonction de la variation de la longueur d'absorption effective de la cellule de mesure (20, 30, 40) ou de la pression du milieu gazeux démodulée, dans lequel les caractéristiques de rayonnement variables dans le temps et l'espace des sources lumineuses à large bande (1) sont homogénéisées au moyen d'un coupleur de mode (5) dans le trajet optique situé entre le deuxième guide d'ondes de lumière (4) et un autre guide d'ondes de lumière (7) situé en amont de la cellule de mesure (20, 30, 40).

2. Dispositif pour la détermination des concentrations d'une substance dans des milieux liquides ou gazeux, au moyen d'une spectroscopie optique d'absorption, comprenant de 1 à n sources de lumière à large bande (1) à sélectivité spectrale, en particulier des DEL, qui sont reliées, par des premiers guide d'ondes de lumière (2), à un premier coupleur de guide d'ondes de lumière ou de fibres (3), comprenant un deuxième guide d'ondes de lumière (4) commun raccordé au coupleur de guide d'ondes de lumière ou de fibres (3), qui guide la lumière provenant des sources lumineuses à large bande (1) passant par une cellule de mesure (20, 30, 40) avec un tronçon de mesure ainsi qu'un détecteur de mesure (11), qui est également un détecteur de référence, et qui est relié à ladite cellule de mesure (20, 30, 40), la lumière fournie par la source de lumière à large bande (1) passant par le tronçon de mesure, la cellule de mesure (20, 30,40) étant conçue en tant que cellule d'auto-référencement de mesure (20, 30, 40), dans lequel, pour générer un signal de référence, la longueur d'interaction du milieu à mesurer sur la longueur d'absorption effective de la cellule de mesure (20, 30, 40) et / ou de la pression du milieu gazeux ou liquide peut être modifiée, dans lequel, un coupleur de mode (5), situé entre le deuxième guide d'ondes de lumière (4) et un autre guide d'ondes de lumière (7) dans le trajet optique entre les premiers coupleurs de guide d'ondes de lumière ou de fibres (3) et la cellule de mesure (20, 30, 40) est prévu pour homogénéiser les caractéristiques de rayonnement variables dans le temps et l'espace des sources lumineuses à large bande (1), le dispositif comprenant un ordinateur (13) qui est conçu pour référencer la détermination des concentrations de substances du système optique par un enregistrement de la forme d'onde optique du signal du détecteur de mesure (11) en fonction de la variation de la longueur d'absorption effective de la cellule de mesure (20, 30, 40) ou de la pression du milieu gazeux démodulée.

3. Dispositif selon la revendication 2, **caractérisé en ce qu'**une plaque de verre inclinable ou tournante (33) est disposée pour modifier la longueur d'interaction du milieu à mesurer dans la cellule de mesure (30).

4. Dispositif selon la revendication 3, **caractérisé en ce qu'**à l'extrémité de la cellule de mesure (30), un miroir concave (34) est utilisé comme réflecteur.

5. Dispositif selon la revendication 2, **caractérisé en ce que** le tronçon de mesure d'auto-référencement de la cellule de mesure (40) comprend un miroir semi-transparent (42) et un miroir plein (43), dans lequel un rotor supplémentaire (44), qui peut être entraîné par le fluide en écoulement à mesurer, est situé sur le trajet optique, obscurcissant temporairement le miroir plein (43).

6. Dispositif selon la revendication 2, **caractérisé en ce que** la cellule de mesure (20) comprend un capteur supplémentaire (21) pour détecter un changement de pression, le signal de mesure détecté par l'un des détecteurs de mesure (11) étant modifié d'une manière prédéfinie.
